# EUROPÄISCHE PATENTANMELDUNG

(11) **EP 4 714 244 A1**
(43) Veröffentlichungstag der Anmeldung: **25.03.2026**
(21) Anmeldenummer: 25196421.9
(22) Anmeldetag: 18.08.2025
(51) Int. Cl.: A01C 5/06, A01C 7/20

(54) **LANDWIRTSCHAFTLICHE AUSBRINGMASCHINE UND VERFAHREN ZUM BETREIBEN DERSELBEN**

(30) Priorität: 19.09.2024 DE 102024126911
(71) Anmelder: Amazonen-Werke H. Dreyer SE & Co. KG, 49205 Hasbergen (DE)
(72) Erfinder: Mertens, Daniel, 49205 Hasbergen-Gaste (DE)

(57) **Zusammenfassung**

Die Erfindung betrifft eine landwirtschaftliche Ausbringmaschine (10) zum Ausbringen von Ausbringmaterial auf einer landwirtschaftlichen Nutzfläche (N), umfassend: eine Scharanordnung (12, 12a, 12b), welche mehrere quer zur Fahrtrichtung (F) nebeneinander angeordnete Schare (14) zum Erzeugen von Ablagefurchen für das Ausbringmaterial aufweist, und eine Striegelanordnung (20, 20a, 20b), welche mehrere in Fahrtrichtung (F) hinter den Scharen (14) angeordnete Striegel (22) aufweist, welche dazu eingerichtet sind, in Fahrtrichtung (F) hinter den Scharen (14) mit einem Anlagedruck über den Boden der landwirtschaftlichen Nutzflächen (N) zu streichen, um die Erdbedeckung des in die Ablagefurchen abgelegten Ausbringmaterials zu vergleichmäßigen, gekennzeichnet durch eine oder mehrere ansteuerbare Druckeinstelleinrichtungen (35, 35a-35d), mittels welcher der Anlagedruck mehrerer oder sämtlicher Striegel (22) während eines Ausbringvorgangs veränderbar ist.

## Beschreibung

Die Erfindung betrifft eine landwirtschaftliche Ausbringmaschine nach dem Oberbegriff des Anspruchs 1 und ein Verfahren zum Betreiben einer landwirtschaftlichen Ausbringmaschine nach dem Oberbegriff des Anspruchs 14.

Ausbringmaterial, insbesondere Saatgut, kann mittels landwirtschaftlicher Ausbringmaschinen, insbesondere Sämaschinen, auf landwirtschaftlichen Nutzflächen ausgebracht werden. Derartige landwirtschaftliche Ausbringmaschinen können jeweils eine mehrere Schare, insbesondere Scheiben- oder Zinkenschare, umfassende Scharanordnung umfassen, mittels welcher in der landwirtschaftlichen Nutzfläche Ablagefurchen, insbesondere Saatfurchen, für das auszubringende Ausbringmaterial erzeugbar sind.

In diesem Zusammenhang sind die Druckschriften DE 101 33 191 A1 und EP 1 273 215 B1 zu nennen, in welchen Sämaschinen mit mechanisch höhenverstellbaren Bodenbearbeitungswerkzeugen offenbart werden. Die Bodenbearbeitungswerkzeuge können an hydraulisch höhenverstellbaren Werkzeugträgern angeordnet sein. Ferner wird eine Drillmaschine offenbart, bei welcher der Schardruck und der Druck auf den Striegel, der den Scharen nachläuft, hydraulisch veränderbar ist.

Werden Saatfurchen mittels eines Zinkenschars erzeugt, so entsteht bei Mulchsaat bei erhöhten Fahrgeschwindigkeiten der landwirtschaftlichen Ausbringmaschine seitlicher Erdwurf durch die einzelnen Zinken des Zinkenschars. Der seitliche Erdwurf hat zur Folge, dass die Erdbedeckung des in die Saatfurchen abgelegten Saatguts für unterschiedliche Saatfurchen voneinander abweichen kann. Die voneinander abweichenden Erdbedeckungen können zu einem unterschiedlichen Feldaufgang der aus dem Saatgut hervorgegangenen Nutzpflanzen auf der landwirtschaftlichen Nutzfläche führen. Aus diesem Grund kann eine mehrere Striegel umfassende Striegelanordnung eingesetzt werden. Die Striegel können über den Boden der landwirtschaftlichen Nutzfläche streichen, um die Erdbedeckung des Saatguts zu vergleichmäßigen. Das Vergleichmäßigen der Erdbedeckung erfolgt besonders effizient, wenn die Striegel beim Streichen über den Boden der landwirtschaftlichen Nutzfläche parallel zum Boden der landwirtschaftlichen Nutzfläche ausgerichtet sind. Beim Betrieb einer landwirtschaftlichen Ausbringmaschine auf heterogenen Böden, welche bereichsweise unterschiedliche Bodenverhältnisse aufweisen, erfolgt häufig keine dauerhafte parallele Ausrichtung sämtlicher Striegel zum Boden.

Die der Erfindung zugrunde liegende Aufgabe besteht somit darin, das Anpassen der Striegel an die Bodenverhältnisse einer landwirtschaftlichen Nutzfläche zu verbessern.

Die der Erfindung zugrunde liegende Aufgabe wird durch eine landwirtschaftliche Ausbringmaschine der eingangs genannten Art gelöst, wobei die landwirtschaftliche Ausbringmaschine eine oder mehrere ansteuerbare Druckeinstelleinrichtungen umfasst, mittels welcher der Anlagedruck mehrerer oder sämtlicher Striegel während eines Ausbringvorgangs veränderbar ist. Der Anlagedruck der mehreren oder sämtlichen Striegel kann im Betrieb der landwirtschaftlichen Ausbringmaschine an das Ausbringmaterial und/oder den Boden der landwirtschaftlichen Nutzfläche anpassbar sein. Der Anlagedruck der mehreren oder sämtlichen Striegel kann im Betrieb der landwirtschaftlichen Ausbringmaschine bedarfsgerecht, beziehungsweise situationsabhängig, anpassbar sein.

Die mehreren oder sämtlichen Schare können als Zinkenschare ausgebildet sein. Alternativ können die mehreren oder sämtlichen Schare als Scheibenschare, beispielsweise als Doppelscheibenschare oder Einscheibenschare, ausgebildet sein. Die mehreren oder sämtlichen Striegel können als Exaktstriegel ausgebildet sein. Die mehreren oder sämtlichen Striegel können offene Saatfurchen mit Erde bedecken und/oder planieren. Die eine oder mehreren Druckeinstelleinrichtungen können mit den mehreren oder sämtlichen Striegeln verbunden sein. Der Anlagedruck der mehreren Striegel betrifft den Druck, mit welchem die mehreren Striegel an dem Boden der landwirtschaftlichen Nutzfläche anliegen. Die mehreren oder sämtlichen Striegel können mittels der einen oder den mehreren Druckeinstelleinrichtungen verschwenkt und/oder in vertikaler Richtung bewegt werden. Folglich können mittels der einen oder den mehreren Druckeinstelleinrichtungen rotatorische und/oder translatorische Freiheitsgrade für die mehreren oder sämtlichen Striegel erzeugt werden. Die eine oder mehreren Druckeinstelleinrichtungen können jeweils zumindest ein Gelenk, insbesondere Drehgelenk, umfassen. Die eine oder mehreren Druckeinstelleinrichtungen ermöglichen eine Konturverfolgung des Bodens durch die mehreren oder sämtlichen Striegel. Dadurch, dass mittels der einen oder den mehreren ansteuerbaren Druckeinstelleinrichtungen der Anlagedruck der mehreren oder sämtlichen Striegel während eines Ausbringvorgangs veränderbar ist, kann der Anlagedruck der mehreren oder sämtlichen Striegel an die Bodenverhältnisse der landwirtschaftlichen Nutzfläche angepasst werden. Folglich kann der Anlagedruck an heterogene Böden angepasst werden. Mittels der einen oder den mehreren Druckeinstelleinrichtungen kann die Aggressivität angepasst werden, mit welcher die mehreren oder sämtlichen Striegel an dem Boden der landwirtschaftlichen Nutzfläche anliegen. Die mehreren oder sämtlichen Striegel können insbesondere zwei Striegelbereiche umfassen. Ein erster und zweiter Striegelbereich können jeweils einen geraden, beziehungsweise linearen, Verlauf aufweisen. Der erste Striegelbereich kann im Betrieb der landwirtschaftlichen Ausbringmaschine oberhalb des zweiten Striegelbereichs angeordnet sein. Die mehreren oder sämtlichen Striegel können jeweils in dem ersten Striegelbereich eine Befestigung aufweisen, mittels welcher die mehreren oder sämtlichen Striegel jeweils mit einem Striegelträger der landwirtschaftlichen Ausbringmaschine verbunden sind. Im Betrieb der landwirtschaftlichen Ausbringmaschine kann der zweite Striegelbereich der mehreren oder sämtlichen Striegel jeweils bereichsweise oder vollständig an dem Boden der landwirtschaftlichen Nutzfläche anliegen, beziehungsweise von dem Boden der landwirtschaftlichen Nutzfläche bereichsweise oder vollständig umgeben sein. Der Anlagedruck der mehreren oder sämtlichen Striegel wird vorzugsweise derart verändert, dass der zweite Striegelbereich im Betrieb der landwirtschaftlichen Ausbringmaschine parallel zum Boden der landwirtschaftlichen Nutzfläche verläuft. Die landwirtschaftliche Ausbringmaschine umfasst vorzugsweise eine Tiefenführungseinrichtung. Die Tiefenführungseinrichtung kann ein oder mehrere Tiefenführungsräder oder Tiefenführungsrollen umfassen.

In einer weiteren Ausführungsform der erfindungsgemäßen landwirtschaftlichen Ausbringmaschine umfassen die eine oder mehreren Druckeinstelleinrichtungen jeweils eine Schwenkmechanik, mittels welcher die mehreren oder sämtlichen Striegel zum Verändern des Anlagedrucks schwenkbar sind. Die mehreren Striegel sind gruppenweise schwenkbar. Es können sämtliche Striegel gemeinsam schwenkbar sein. Dadurch, dass die mehreren oder sämtlichen Striegel mittels der jeweils einen Schwenkmechanik der einen oder mehreren Druckeinstelleinrichtungen schwenkbar sind, können sich die mehreren oder sämtlichen Striegel Bodenunebenheiten anpassen und/oder beispielsweise eine gleichmäßige Saatgutbedeckung bewirken. Die mehreren oder sämtlichen Striegel können auf strohfreien und/oder strohreichen landwirtschaftlichen Nutzflächen eine gleichmäßige Saatgutbedeckung bewirken. Die Schwenkmechanik kann zumindest ein Gelenk, insbesondere Drehgelenk, umfassen.

In einer anderen Ausführungsform der erfindungsgemäßen landwirtschaftlichen Ausbringmaschine umfassen die eine oder mehreren Druckeinstelleinrichtungen jeweils einen Aktor. Die Aktoren können beispielsweise hydraulische Aktoren, pneumatische Aktoren oder elektromotorische Aktoren sein. Die Aktoren können mittels einer elektronischen Steuerungseinheit ansteuerbar sein. Der Anlagedruck der mehreren oder sämtlichen Striegel kann über die Aktoren mittels einer elektronischen Steuerungseinheit automatisiert eingestellt werden.

In einer weiteren Ausführungsform der erfindungsgemäßen landwirtschaftlichen Ausbringmaschine umfasst der Aktor jeweils einen oder mehrere hydraulische Zylinder. Alternativ oder zusätzlich umfasst der Aktor einen oder mehrere Pneumatikzylinder. Alternativ oder zusätzlich umfasst der Aktor einen oder mehrere Elektromotoren. Der Aktor kann durch eine elektronische Steuerungseinheit gesteuert werden. Der Aktor kann mittels einer Benutzereingabe gesteuert werden. Der Aktor kann automatisiert gesteuert werden. Dadurch, dass der Aktor einen oder mehrere hydraulische Zylinder umfasst, ist der Anlagedruck der mehreren oder sämtlichen Striegel mittels Hydraulikdruck veränderbar.

In einer weiteren bevorzugten Ausführungsform umfasst die erfindungsgemäße landwirtschaftliche Ausbringmaschine einen oder mehrere die Striegelanordnung tragende Tragarme, welche mittels der einen oder den mehreren Druckeinstelleinrichtungen schwenkbar sind. An dem einen oder den mehreren Tragarmen sind jeweils ein oder mehrere Striegelträger befestigt, an welchen jeweils mehrere Striegel angeordnet sind. Der eine oder die mehreren Tragarme können gemeinsam mit den mehreren oder sämtlichen Striegeln schwenkbar sein. Der eine oder die mehreren Tragarme können Metall umfassen. Die eine oder mehreren Druckeinstelleinrichtungen können den einen oder die mehreren Tragarme verschwenken und/oder in vertikaler Richtung bewegen. Die eine oder mehreren Druckeinstelleinrichtungen können separat von dem einen oder den mehreren Tragarmen ausgebildet sein. Der eine oder die mehreren Tragarme können mittels der einen oder den mehreren Druckeinstelleinrichtungen den Anlagedruck der mehreren oder sämtlichen Striegel zusätzlich erhöhen. Der eine oder die mehreren Tragarme umfassen vorzugsweise jeweils ein Gelenk, insbesondere ein Drehgelenk. Der eine oder die mehreren Tragarme können entlang des jeweils einen Gelenks verschwenkt werden. Der eine oder die mehreren Tragarme können jeweils als Einarmschwinge ausgebildet sein. Der eine oder die mehreren Tragarme können Bestandteil der Schwenkmechanik sein.

In einer anderen Ausführungsform der erfindungsgemäßen landwirtschaftlichen Ausbringmaschine weisen der eine oder die mehreren Tragarme eine Schwenkachse auf, wobei der eine oder die mehreren Tragarme und die mehreren oder sämtlichen Striegel um die Schwenkachse schwenkbar sind. Der eine oder die mehreren Tragarme können jeweils zumindest ein Gelenk, insbesondere Drehgelenk, aufweisen. Das jeweils zumindest eine Gelenk, beziehungsweise die durch das jeweils zumindest eine Gelenk vorgegebene Gelenkachse, kann die Schwenkachse definieren. Im Betrieb der landwirtschaftlichen Ausbringmaschine auf einer landwirtschaftlichen Nutzfläche kann die Schwenkachse parallel zur landwirtschaftlichen Nutzfläche verlaufen.

Wenn die landwirtschaftliche Ausbringmaschine auf einer unebenen landwirtschaftlichen Nutzfläche betrieben wird, kann die Schwenkachse, zumindest bereichsweise, schräg zur landwirtschaftlichen Nutzfläche verlaufen.

In einer anderen bevorzugten Ausführungsform umfasst die erfindungsgemäße landwirtschaftliche Ausbringmaschine eine elektronische Steuerungseinheit, welche dazu eingerichtet ist, die eine oder mehreren Druckeinstelleinrichtungen zum Verändern des Anlagedrucks der Striegel anzusteuern. Die elektronische Steuerungseinheit kann mittels einer Benutzereingabe bedient werden. Die elektronische Steuerungseinheit kann auf Grundlage einer Benutzereingabe die eine oder mehreren Druckeinstelleinrichtungen zum Verändern des Anlagedrucks der Striegel ansteuern. Die elektronische Steuerungseinheit kann automatisiert die eine oder mehreren Druckeinstelleinrichtungen zum Verändern des Anlagedrucks der Striegel ansteuern. Dadurch, dass die elektronische Steuerungseinheit dazu eingerichtet ist, die eine oder mehreren Druckeinstelleinrichtungen zum Verändern des Anlagedrucks der Striegel anzusteuern, kann der Anlagedruck der Striegel automatisiert an Bodenunebenheiten der landwirtschaftlichen Nutzfläche angepasst werden.

In einer anderen Ausführungsform der erfindungsgemäßen landwirtschaftlichen Ausbringmaschine sind mehrere Aktoren der einen oder mehreren Druckeinstelleinrichtungen mittels der elektronischen Steuerungseinheit gemeinsam oder unabhängig voneinander ansteuerbar. Dadurch, dass mehrere Aktoren mittels der elektronischen Steuerungseinheit unabhängig ansteuerbar sind, können im Betrieb der landwirtschaftlichen Ausbringmaschine mehrere oder sämtliche Striegel, insbesondere situationsbedingt, aktiviert und/oder deaktiviert werden. Die mehreren oder sämtliche Striegel können insbesondere durch Verschwenken der mehreren oder sämtlichen Tragarme aktiviert und/oder deaktiviert werden. Wenn mehrere Aktoren der einen oder mehreren Druckeinstelleinrichtungen mittels der elektronischen Steuerungseinheit unabhängig voneinander ansteuerbar sind, können voneinander abweichende Anlagedrücke und/oder voneinander abweichende Striegelausrichtungen entlang der Arbeitsbreite der landwirtschaftlichen Ausbringmaschine eingestellt werden. Folglich können die Anlagedrücke und/oder Striegelausrichtungen entlang der Arbeitsbreite der landwirtschaftlichen Ausbringmaschine an Unebenheiten der landwirtschaftlichen Nutzfläche angepasst werden. Wenn mehrere Aktoren der einen oder mehreren Druckeinstelleinrichtungen mittels der elektronischen Steuerungseinheit unabhängig voneinander angesteuert werden, können die Striegel mit voneinander abweichenden Anlagedrücken an der landwirtschaftlichen Nutzfläche anliegen. Die mehreren Aktoren der einen oder mehreren Druckeinstelleinrichtungen können mittels der elektronischen Steuerungseinheit derart unabhängig voneinander angesteuert werden, dass beim Betrieb der landwirtschaftlichen Ausbringmaschine auf einer unebenen landwirtschaftlichen Nutzfläche, beziehungsweise einer einen heterogenen Boden umfassenden landwirtschaftlichen Nutzfläche, sämtliche Striegel jeweils parallel zum Boden der landwirtschaftlichen Nutzfläche verlaufen.

In einer bevorzugten Ausführungsform der erfindungsgemäßen landwirtschaftlichen Ausbringmaschine ist mittels der elektronischen Steuerungseinheit ein Sollanlagedruck an den Striegeln einstellbar. Der Sollanlagedruck kann durch eine Benutzereingabe und/oder automatisiert einstellbar sein. Der Sollanlagedruck kann situationsbedingt, insbesondere bedarfsgerecht, einstellbar sein. Der Sollanlagedruck kann, insbesondere im Betrieb der landwirtschaftlichen Ausbringmaschine, in Abhängigkeit des Anlagedrucks der mehreren Schare, der Fahrgeschwindigkeit der landwirtschaftlichen Ausbringmaschine, der vorgegebenen Sollauslenkung der Striegel und/oder des auszubringenden Ausbringmaterials einstellbar sein. Das auszubringende Ausbringmaterial kann Saatgut und/oder Dünger, insbesondere Granulat, umfassen. Der Sollanlagedruck kann von der Art des Bodens der landwirtschaftlichen Nutzfläche abhängig sein.

In einer weiteren Ausführungsform der erfindungsgemäßen landwirtschaftlichen Ausbringmaschine ist die elektronische Steuerungseinheit dazu eingerichtet, den Sollanlagedruck und/oder einen Sollanlagedruckbereich zu ermitteln. Die elektronische Steuerungseinheit kann dazu eingerichtet sein, den Sollanlagedruck und/oder den Sollanlagedruckbereich durch Berechnung oder Datenabruf, insbesondere von einer Datenbank, zu ermitteln. Der Sollanlagedruck kann innerhalb des Sollanlagedruckbereichs liegen. Die elektronische Steuerungseinheit kann dazu eingerichtet sein, den Sollanlagedruck und/oder den Sollanlagedruckbereich auf Grundlage einer Berechnungsvorschrift zu ermitteln.

In einer weiteren Ausführungsform der erfindungsgemäßen landwirtschaftlichen Ausbringmaschine ist die elektronische Steuerungseinheit dazu eingerichtet, beim Ermitteln des Sollanlagedrucks und/oder des Sollanlagedruckbereichs den Anlagedruck der mehreren Schare, die Fahrgeschwindigkeit der landwirtschaftlichen Ausbringmaschine, eine vorgegebene Sollauslenkung der Striegel, des auszubringenden Ausbringmaterials und/oder der auszubringenden Menge an Ausbringmaterial zu berücksichtigen. Der Anlagedruck der mehreren Schare kann eine Abhängigkeit von der Beschaffenheit der landwirtschaftlichen Nutzfläche, beziehungsweise der Beschaffenheit des Bodens der landwirtschaftlichen Nutzfläche, aufweisen. Der Anlagedruck der mehreren Schare kann eine Abhängigkeit von der Feuchtigkeit der landwirtschaftlichen Nutzfläche, beziehungsweise der Feuchtigkeit des Bodens der landwirtschaftlichen Nutzfläche, aufweisen. Die Fahrgeschwindigkeit der landwirtschaftlichen Ausbringmaschine kann bei einer Kurvenfahrt der landwirtschaftlichen Ausbringmaschine, beziehungsweise wenn die landwirtschaftliche Ausbringmaschine das Vorgewende befährt, reduziert sein. Die vorgegebene Sollauslenkung der Striegel kann eine Abhängigkeit von der Beschaffenheit der landwirtschaftlichen Nutzfläche, beziehungsweise der Beschaffenheit des Bodens der landwirtschaftlichen Nutzfläche, aufweisen. Das auszubringende Ausbringmaterial kann Saatgut und/oder Dünger, insbesondere Granulat, umfassen. Die Art des Saatguts und/oder Düngers kann beim Ermitteln des Sollanlagedrucks und/oder des Sollanlagedruckbereichs berücksichtigt werden. Die Menge des auszubringenden Ausbringmaterials kann eine Abhängigkeit von der gefahrenen Distanz oder der Position der landwirtschaftlichen Ausbringmaschine auf der landwirtschaftlichen Nutzfläche aufweisen. Die Menge des auszubringenden Ausbringmaterials kann während des Ausbringvorgangs eine zeitliche Abhängigkeit aufweisen.

In einer anderen bevorzugten Ausführungsform umfasst die erfindungsgemäße landwirtschaftliche Ausbringmaschine einen oder mehrere Sensoren, welche dazu eingerichtet sind, den Anlagedruck der mehreren Striegel, den Abstand zwischen einem oder mehreren Referenzpunkten und der landwirtschaftlichen Nutzfläche und/oder eine Istauslenkung der Striegel zu erfassen. Der eine oder die mehreren Sensoren können jeweils als Drehwinkelsensor, Kraftsensor und/oder Wegsensor ausgebildet sein. Die mehreren Sensoren können als voneinander abweichende Arten von Sensoren ausgebildet sein. Beispielsweise kann ein erster Teil der mehreren Sensoren jeweils als Drehwinkelsensor und ein zweiter Teil der mehreren Sensoren jeweils als Kraftsensor ausgebildet sein. Der eine oder die mehreren Sensoren können an dem einen oder den mehreren Striegelträgern und/oder an dem einen oder den mehreren Tragarmen und/oder an den mehreren oder sämtlichen Striegeln angeordnet sein. Der eine oder die mehreren Sensoren können beabstandet von dem einen oder den mehreren Tragarmen angeordnet sein. Der eine oder die mehreren Sensoren können beabstandet von dem einen oder den mehreren Striegelträgern angeordnet sein. Der eine oder die mehreren Sensoren können beabstandet von den mehreren oder sämtlichen Striegeln angeordnet sein. Der eine oder die mehreren Sensoren können beabstandet von dem einen oder den mehreren Tragarmen angeordnet sein. Der eine oder die mehreren Sensoren können beabstandet von dem einen oder den mehreren Striegelträgern angeordnet sein. Der eine oder die mehreren Sensoren können beabstandet von den mehreren oder sämtlichen Striegeln angeordnet sein. Die mehreren oder sämtlichen Striegel sind über Vorspannelemente vorspannbar. Die Vorspannelemente können Federn, insbesondere Zugfedern, und/oder Gummiformelemente umfassen. Die mehreren oder sämtlichen Striegel können hydraulisch vorgespannt sein. Der Anlagedruck der mehreren oder sämtlichen Striegel kann durch Vorspannelemente zusätzlich zu der Einstellung über die eine oder die mehreren Druckeinstelleinrichtungen eingestellt werden. Die elektronische Steuerungseinheit kann durch die eine oder die mehreren Druckeinstelleinrichtungen den Anlagedruck der mehreren oder sämtlichen Striegel in Abhängigkeit der Signale der Sensoren anpassen.

In einer anderen Ausführungsform der erfindungsgemäßen landwirtschaftlichen Ausbringmaschine sind die mehreren oder sämtlichen Striegel mittels der einen oder mehreren Druckeinstelleinrichtungen zwischen einer ausgeklappten Arbeitsposition und einer eingeklappten Transportposition klappbar. Im Betrieb der landwirtschaftlichen Ausbringmaschine auf einer landwirtschaftlichen Nutzfläche können die mehreren oder sämtlichen Striegel mittels der einen oder den mehreren Druckeinstelleinrichtungen zwischen einer ausgeklappten Arbeitsposition und einer eingeklappten Transportposition klappbar sein. Ein erster Anteil der mehreren Striegel kann sich in der ausgeklappten Arbeitsposition befinden, während sich ein zweiter Anteil der mehreren Striegel in der eingeklappten Transportposition befindet. Im Betrieb der landwirtschaftlichen Ausbringmaschine auf einer, insbesondere heterogenen Boden umfassenden, landwirtschaftlichen Nutzfläche können die mehreren Striegel sich im Bereich eines ersten Teils der landwirtschaftlichen Nutzfläche in ausgeklappter Arbeitsposition und im Bereich eines zweiten Teils der landwirtschaftlichen Nutzfläche in eingeklappter Transportposition befinden. Der Boden des ersten Teils der landwirtschaftlichen Nutzfläche kann beispielsweise eine geringere Feuchtigkeit aufweisen als der Boden des zweiten Teils der landwirtschaftlichen Nutzfläche.

Die der Erfindung zugrunde liegende Aufgabe wird ferner gelöst durch ein Verfahren der eingangs genannten Art, wobei das Verfahren den Schritt umfasst: Verändern des Anlagedrucks der mehreren oder sämtlichen Striegel während eines Ausbringvorgangs mittels einer oder mehrerer Druckeinstelleinrichtungen. Der Anlagedruck der mehreren oder sämtlichen Striegel kann während des Ausbringvorgangs mittels einer oder mehrerer Druckeinstelleinrichtungen in Abhängigkeit der Beschaffenheit der landwirtschaftlichen Nutzfläche, beziehungsweise der Beschaffenheit des Bodens der landwirtschaftlichen Nutzfläche, verändert werden. Folglich kann der Anlagedruck der mehreren oder sämtlichen Striegel an Unebenheiten der landwirtschaftlichen Nutzfläche angepasst werden.

Nachfolgend werden bevorzugte Ausführungsformen der Erfindung unter Bezugnahme auf die beiliegenden Zeichnungen näher erläutert und beschrieben. Dabei zeigen:
- Fig. 1: eine perspektivische Ansicht einer erfindungsgemäßen landwirtschaftlichen Ausbringmaschine;
- Fig. 2: eine Seitenansicht der in Fig. 1 dargestellten landwirtschaftlichen Ausbringmaschine;
- Fig. 3: eine perspektivische Ansicht einer weiteren erfindungsgemäßen landwirtschaftlichen Ausbringmaschine;
- Fig. 4: eine Seitenansicht der in Fig. 3 dargestellten landwirtschaftlichen Ausbringmaschine;
- Fig. 5: eine Draufsicht einer weiteren erfindungsgemäßen landwirtschaftlichen Ausbringmaschine in einem Arbeitszustand;
- Fig. 6: eine perspektivische Ansicht der in Fig. 5 dargestellten landwirtschaftlichen Ausbringmaschine in einem Transportzustand;
- Fig. 7: eine Seitenansicht der in Fig. 5 dargestellten landwirtschaftlichen Ausbringmaschine in einem Transportzustand;
- Fig. 8: eine Rückansicht der in Fig. 5 dargestellten landwirtschaftlichen Ausbringmaschine in einem Transportzustand;
- Fig. 9: eine perspektivische Ansicht mehrerer Tragarme einer erfindungsgemäßen landwirtschaftlichen Ausbringmaschine;
- Fig. 10: eine perspektivische Ansicht mehrerer Vorspannelemente und einer Verstellschiene einer erfindungsgemäßen landwirtschaftlichen Ausbringmaschine;
- Fig. 11: eine weitere perspektivische Ansicht der in Fig. 10 dargestellten mehreren Vorspannelemente und der Verstellschiene;
- Fig. 12: eine Seitenansicht eines Tragarms einer erfindungsgemäßen landwirtschaftlichen Ausbringmaschine;
- Fig. 13: eine weitere Seitenansicht des in Fig. 12 dargestellten Tragarms;
- Fig. 14: eine perspektivische Ansicht eines Striegelträgers einer erfindungsgemäßen landwirtschaftlichen Ausbringmaschine;
- Fig. 15: ein Blockdiagramm zum Zusammenspiel des Sensors und der Druckeinstelleinrichtung einer erfindungsgemäßen landwirtschaftlichen Ausbringmaschine; und
- Fig. 16: ein Blockdiagramm zur Abhängigkeit des Sollbereichs der mittels des Sensors einer erfindungsgemäßen landwirtschaftlichen Ausbringmaschine zu erfassenden Sensorgröße von mehreren Faktoren.

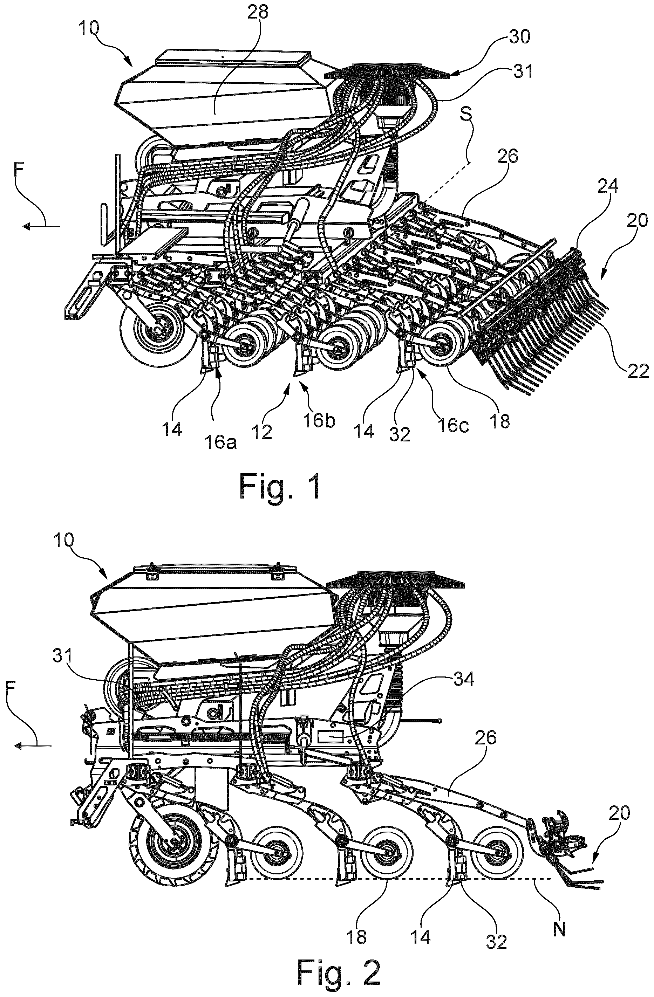

Die Fig. 1 und Fig. 2 zeigen eine landwirtschaftliche Ausbringmaschine 10, welche eine Scharanordnung 12 umfasst. Die Scharanordnung 12 umfasst mehrere als Zinkenschare ausgebildete Schare 14. Die mehreren Schare 14 erstrecken sich entlang der ersten, zweiten und dritten Scharreihe 16a-16c.

Ferner umfasst die landwirtschaftliche Ausbringmaschine 10 mehrere Tiefenführungsräder 18. Mehrere der Tiefenführungsräder 18 befinden sich in Fahrtrichtung F der landwirtschaftlichen Ausbringmaschine 10 hinter der ersten Scharreihe 16a. Mehrere der Tiefenführungsräder 18 befinden sich in Fahrtrichtung F der landwirtschaftlichen Ausbringmaschine hinter der zweiten Scharreihe 16b. Mehrere der Tiefenführungsräder 18 befinden sich in Fahrtrichtung F der landwirtschaftlichen Ausbringmaschine 10 hinter der dritten Scharreihe 16c. Die sich in Fahrtrichtung F der landwirtschaftlichen Ausbringmaschine 10 hinter der ersten Scharreihe 16a befindenden mehreren Tiefenführungsräder befinden sich zwischen der ersten Scharreihe 16a und der zweiten Scharreihe 16b. Die mehreren in Fahrtrichtung F der landwirtschaftlichen Ausbringmaschine 10 hinter der zweiten Scharreihe 16b befindenden mehreren Tiefenführungsräder 18 befinden sich zwischen der zweiten Scharreihe 16b und der dritten Scharreihe 16c. In einer nicht gezeigten Ausführungsform der landwirtschaftlichen Ausbringmaschine 10 befinden sich die Tiefenführungsräder 18 jeweils in Fahrtrichtung F vor der ersten, zweiten und dritten Scharreihe 16a, 16b, 16c.

Mittels der mehreren Tiefenführungsräder 18 wird eingestellt, wie tief die mehreren Schare 14 in den Boden der landwirtschaftlichen Nutzfläche im Betrieb der landwirtschaftlichen Ausbringmaschine 10 eindringen. Folglich kann mittels der mehreren Tiefenführungsräder 18 die Form und Tiefe der durch die Schare 14 im Betrieb der landwirtschaftlichen Ausbringmaschine 10 erzeugten Ablagefurchen beeinflusst werden.

Des Weiteren umfasst die landwirtschaftliche Ausbringmaschine 10 eine Striegelanordnung 20. Die Striegelanordnung 20 umfasst mehrere Striegel 22. Die mehreren Striegel 22 der Striegelanordnung 20 sind an einem Striegelträger 24 der landwirtschaftlichen Ausbringmaschine 10 angeordnet. Der Striegelträger 24 ist mit mehreren Tragarmen 26 der landwirtschaftlichen Ausbringmaschine 10 verbunden. Die mehreren Tragarme 26 sind entlang der Schwenkachse S verschwenkbar. Folglich kann die Striegelanordnung 20, beziehungsweise die mehreren Striegel 22, mittels der mehreren Tragarme 26 verschwenkt werden. Durch das Verschwenken der Striegelanordnung 20, beziehungsweise der mehreren Striegel 22, können die mehreren Striegel 22 in eine Arbeitsposition oder eine Transportposition verbracht werden. Die mehreren Striegel 22 befinden sich in Arbeitsposition. Folglich liegen die mehreren Striegel 22 an der landwirtschaftlichen Nutzfläche N an. Die mehreren Striegel 22 sind bereichsweise von Erde der landwirtschaftlichen Nutzfläche N bedeckt.

Die landwirtschaftliche Ausbringmaschine 10 weist einen Ausbringmaterialbehälter 28 auf. Der Ausbringmaterialbehälter 28 ist als Saatgutbehälter ausgebildet. Der Ausbringmaterialbehälter 28 kann mit körnigem Material, wie Saatgut und/oder Dünger, befüllt werden. Das Saatgut kann beispielsweise Getreidekörner und/oder Maiskörner umfassen. Der Dünger kann Mineraldünger sein.

Die landwirtschaftliche Ausbringmaschine 10 umfasst ferner eine Materialausbringeinrichtung 30 mit mehreren Förderleitungen 31 und mehreren Abgaberohren 32. Die Förderleitungen 31 sind als Schläuche ausgebildet. Mittels der Förderleitungen 31 wird das in dem Ausbringmaterialbehälter 28 befindliche Saatgut zu den mehreren Abgaberohren 32 transportiert. Die mehreren Abgaberohre 32 sind jeweils benachbart zu einem Schar 14 angeordnet. Jeweils ein Abgaberohr 32 ist in Fahrtrichtung F der landwirtschaftlichen Ausbringmaschine 10 zwischen einem Schar 14 und einem benachbarten Tiefenführungsrad 18 angeordnet. Mittels der mehreren Abgaberohre 32 wird das Saatgut in die durch die mehreren Schare 14 erzeugten Saatfurchen eingebracht. Nach Einbringen des Saatguts in die Saatfurchen wird die Erdbedeckung des in die Saatfurchen eingebrachten Saatguts mittels der mehreren Striegel 22 vergleichmäßigt. Ferner umfasst die landwirtschaftliche Ausbringmaschine 10 eine elektronische Steuerungseinheit 34. Mittels der elektronischen Steuerungseinheit 34 kann das Verschwenken der mehreren Tragarme 26 veranlasst werden.

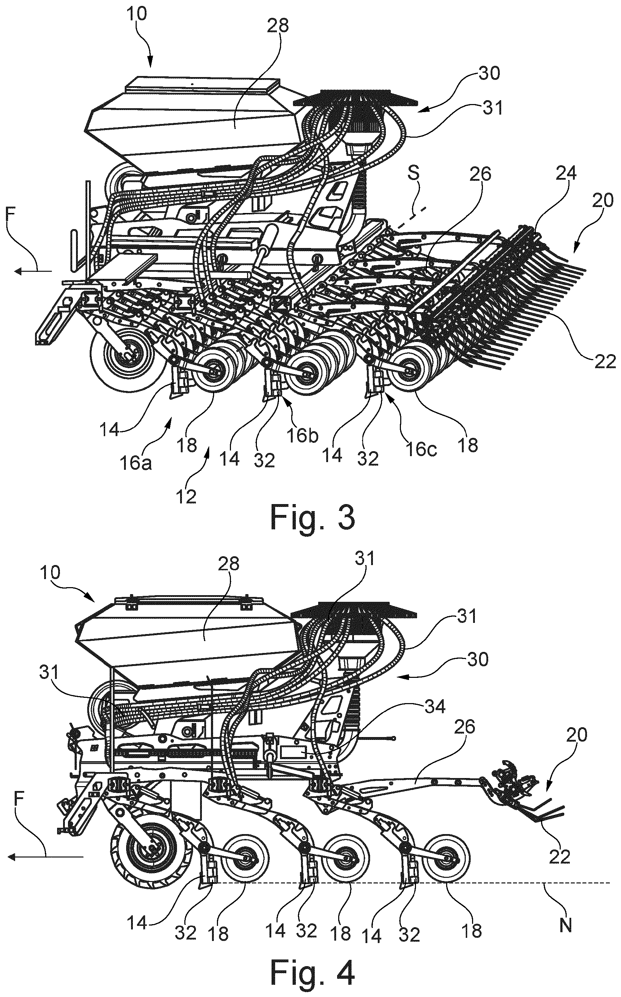

Die Fig. 3 und Fig. 4 zeigen eine landwirtschaftliche Ausbringmaschine 10, wobei sich die Striegelanordnung 20, beziehungsweise die mehreren Striegel 22, anders als in Fig. 1 und Fig. 2, in Transportposition befinden. Folglich ist die Striegelanordnung 20, beziehungsweise die mehreren Striegel 22, mittels der mehreren Tragarme 26 entlang der Schwenkachse S verschwenkt, beziehungsweise hochgeklappt. Folglich berühren die mehreren Striegel 22 im Betrieb der landwirtschaftlichen Ausbringmaschine 10 nicht die landwirtschaftliche Nutzfläche N. Aufgrund der Beschaffenheit des Bodens, beziehungsweise der Erde, der landwirtschaftlichen Nutzfläche N ist ein Vergleichmäßigen der Erdbedeckung des in die Ablagefurchen abgelegten Saatguts mittels der mehreren Striegel 22 nicht erforderlich. Die Beschaffenheit des Bodens der landwirtschaftlichen Nutzfläche N umfasst eine erhöhte Feuchtigkeit.

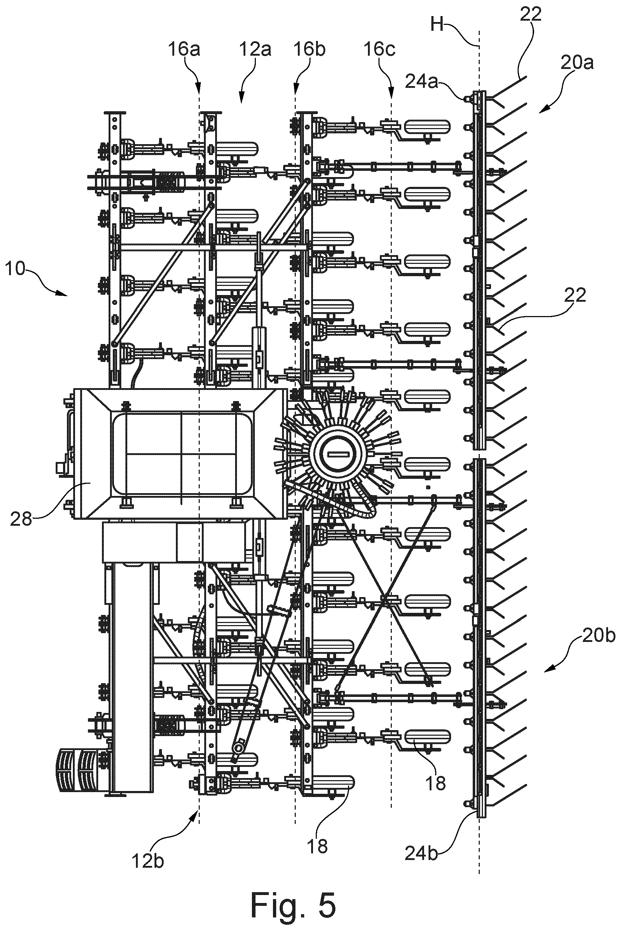

Die Fig. 5 zeigt eine sich im Arbeitszustand befindliche landwirtschaftliche Ausbringmaschine 10. Die landwirtschaftliche Ausbringmaschine 10 umfasst eine erste und zweite Scharanordnung 12a, 12b. Ferner umfasst die landwirtschaftliche Ausbringmaschine 10 eine erste, zweite und dritte Scharreihe 16a-16c. Die zweite Scharreihe 16b befindet sich zwischen der ersten und dritten Scharreihe 16a, 16c. Die erste, zweite und dritte Scharreihe 16a-16c umfassen jeweils mehrere Schare 14. Des Weiteren umfasst die landwirtschaftliche Ausbringmaschine 10 eine erste und zweite Striegelanordnung 20a, 20b. Die erste und zweite Striegelanordnung 20a, 20b umfassen jeweils mehrere Striegel 22. Die mehreren Striegel 22 der ersten Striegelanordnung 20a sind an dem ersten Striegelträger 24a der landwirtschaftlichen Ausbringmaschine 10 befestigt. Die mehreren Striegel 22 der zweiten Striegelanordnung 20b sind an dem zweiten Striegelträger 24b der landwirtschaftlichen Ausbringmaschine 10 befestigt. In einer nicht gezeigten Ausführungsform sind alle Striegel 22 an einem einzigen Striegelträger 24 befestigt und werden gemeinsam verstellt. Der erste und zweite Striegelträger 24a, 24b erstrecken sich entlang einer Horizontalen H. Der erste und zweite Striegelträger 24a, 24b sind entlang der Horizontalen H benachbart zueinander angeordnet. Die erste und zweite Scharanordnung 12a, 12b sind entlang der Horizontalen H benachbart zueinander angeordnet. Die erste und zweite Striegelanordnung 20a, 20b sind entlang der Horizontalen H benachbart zueinander angeordnet. Die dritte Scharreihe 16c ist zwischen der zweiten Scharreihe 16b einerseits und dem ersten und zweiten Striegelträger 24a, 24b andererseits angeordnet.

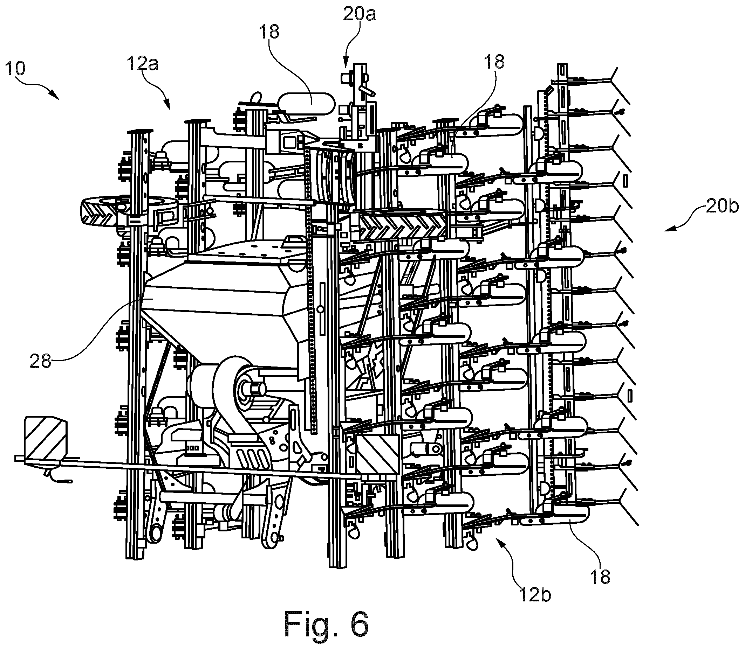

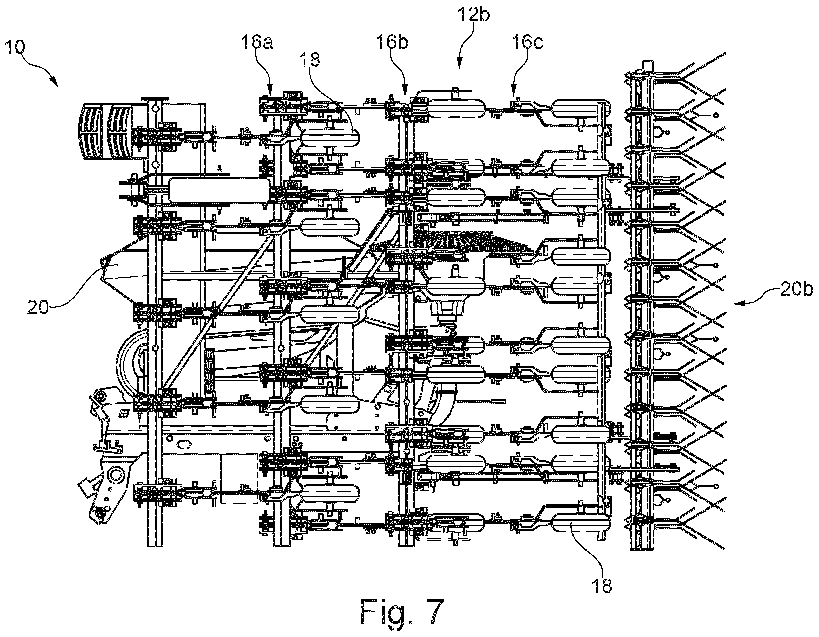

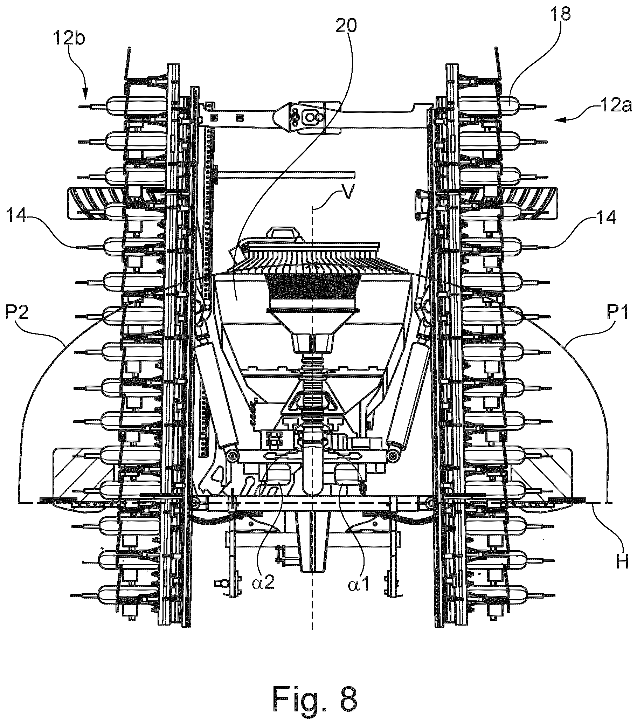

Die Fig. 6 bis Fig. 8 zeigen die in Fig. 5 dargestellte landwirtschaftliche Ausbringmaschine 10 im Transportzustand. Die erste und zweite Scharanordnung 12a,12b erstrecken sich jeweils zumindest annährend parallel zur Vertikalen V. Im Arbeitszustand der landwirtschaftlichen Ausbringmaschine 10 erstrecken sich die erste und zweite Scharanordnung 12a, 12b, wie in Fig. 5 dargestellt, jeweils entlang der Horizontalen H. Beim Übergang der landwirtschaftlichen Ausbringmaschine 10 vom Arbeitszustand in den Transportzustand wird die erste Scharanordnung 12a entlang des ersten Vertikalstellungspfades P1 über den ersten Vertikalstellungswinkelbereich α1 verkippt. Beim Übergang der landwirtschaftlichen Ausbringmaschine 10 vom Arbeitszustand in den Transportzustand wird die zweite Scharanordnung 12b entlang des zweiten Vertikalstellungspfades P2 über den zweiten Vertikalstellungswinkelbereich α2 verkippt. Der erste und zweite Vertikalstellungswinkelbereich α1, α2 weisen denselben Wert auf. Der erste Vertikalstellungswinkelbereich α1 weist einen Wert von zumindest annährend 90 Grad auf. Folglich weist der zweite Vertikalstellungswinkelbereich α2 einen Wert von ebenfalls zumindest annährend 90 Grad auf. Der erste Vertikalstellungswinkelbereich α1 beschreibt einen Winkelbereich zwischen der Horizontalen H und der Vertikalen V. Der zweite Vertikalstellungswinkelbereich α2 beschreibt einen Winkelbereich zwischen der Horizontalen H und der Vertikalen V.

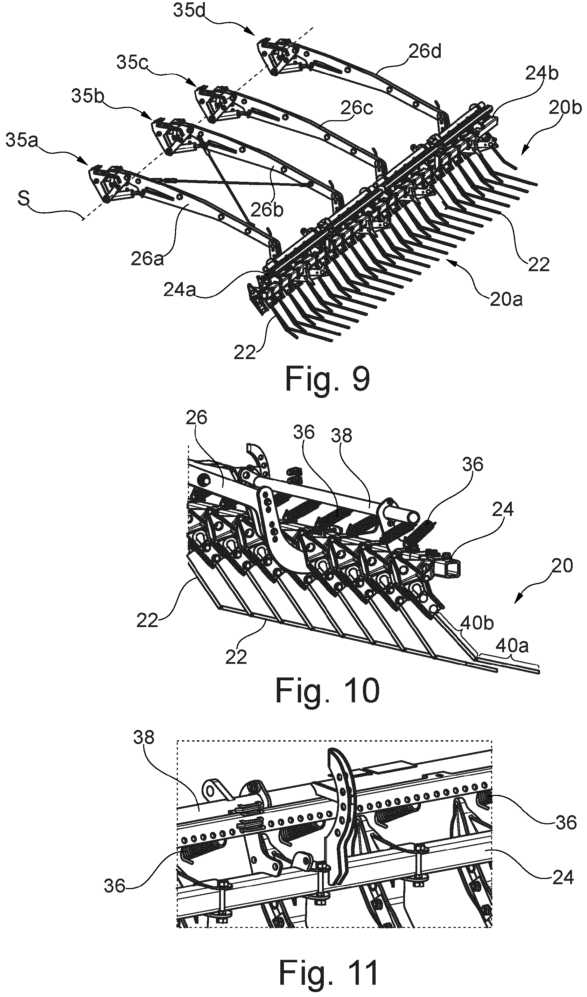

Die Fig. 9 zeigt einen ersten, zweiten, dritten und vierten Tragarm 26a-26d einer landwirtschaftlichen Ausbringmaschine 10. An dem ersten und zweiten Tragarm 26a, 26b ist der erste Striegelträger 24a angeordnet. An dem dritten und vierten Tragarm 26c, 26d ist der zweite Striegelträger 24b angeordnet. Der erste Striegelträger 24a trägt die erste Striegelanordnung 20a, wobei die erste Striegelanordnung 20a mehrere Striegel 22 umfasst. Der zweite Striegelträger 24b trägt die zweite Striegelanordnung 20b, wobei die zweite Striegelanordnung 20b mehrere Striegel 22 umfasst. Der erste Tragarm 26a ist mittels der ersten Druckeinstelleinrichtung 35a um die Schwenkachse S verschwenkbar. Der zweite Tragarm 26b ist mittels der zweiten Druckeinstelleinrichtung 35b um die Schwenkachse S verschwenkbar. Der dritte Tragarm 26c ist mittels der dritten Druckeinstelleinrichtung 35c um die Schwenkachse S verschwenkbar. Der vierte Tragarm 26d ist mittels der vierten Druckeinstelleinrichtung 35d um die Schwenkachse S verschwenkbar.

Die Fig. 10 und Fig. 11 zeigen mehrere Vorspannelemente 36 und eine Verstellschiene 38 einer landwirtschaftlichen Ausbringmaschine 10, mittels derer der Anlagedruck der mehreren Striegel 22 der Striegelanordnung 20, welche in Fig. 9 dargestellt wird, veränderbar ist. Die mehreren Striegel 22 weisen jeweils einen ersten und zweiten Striegelbereich 40a, 40b auf. Der jeweils erste Striegelbereich 40a der mehreren Striegel 22 liegt jeweils mit einem Anlagedruck an dem Boden der landwirtschaftlichen Nutzfläche an. Die mehreren Vorspannelemente 36 sind jeweils als Zugfeder ausgebildet. Weitere elastische und/oder aktorisch betriebene Vorspannelemente 36 sind denkbar. Jeweils eines der mehreren Vorspannelemente 36 ist zwischen jeweils einem der mehreren Striegel 22 einerseits und der Verstellschiene 38 andererseits angeordnet. Die Position der Verstellschiene 38 kann relativ zum Striegelträger 24 verändert werden. Folglich kann die Zugkraft der mehreren Vorspannelemente 36 verändert werden. Durch die veränderte Zugkraft der mehreren Vorspannelemente 36 wird der Anlagedruck der mehreren Striegel 22 verändert.

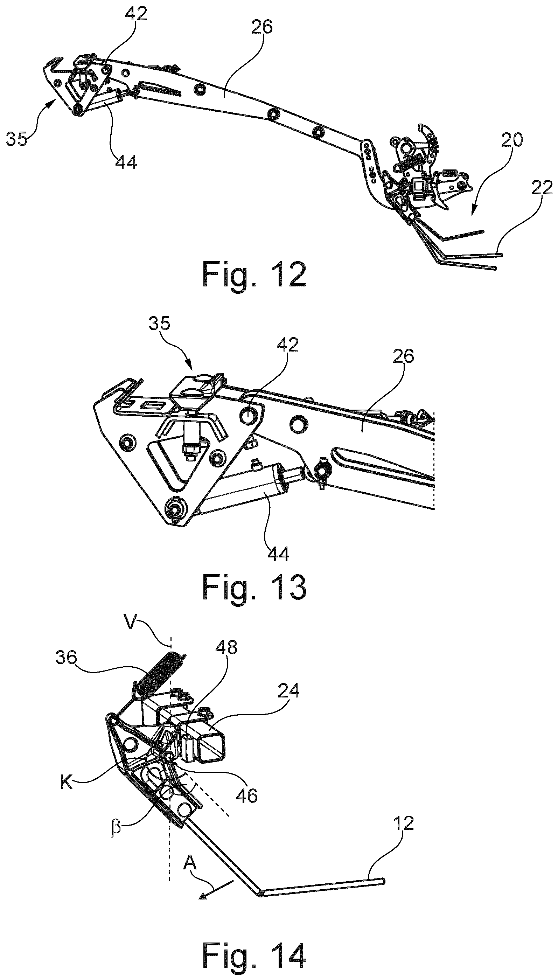

Die Fig. 12 und Fig. 13 zeigen einen Tragarm 26 einer landwirtschaftlichen Ausbringmaschine 10, an welchem mehrere Striegel 22 einer Striegelanordnung 20 befestigt sind. Der Tragarm 26 kann mittels einer Druckeinstelleinrichtung 35 verschwenkt werden. Die Druckeinstelleinrichtung 35 umfasst ein Einstellgelenk 42 und einen Aktor 44. Der Aktor 44 ist als Druckzylinder ausgebildet. Der Aktor 44 kann mittels einer elektronischen Steuerungseinheit 34 angesteuert werden. Durch das Ansteuern des Aktors 44 kann der Aktor 44 eine mechanische Kraft auf den Tragarm 26 ausüben, sodass der Tragarm mitsamt der Striegelanordnung 20, beziehungsweise der mehreren Striegel 22, um das Einstellgelenk 42 verschwenkt wird.

Die Fig. 14 zeigt den Striegelträger 24 einer landwirtschaftlichen Ausbringmaschine 10, an welchem der Sensor 48 befestigt ist. Der Sensor 48 ist als Drehwinkelsensor ausgebildet. Ferner ist an dem Striegelträger 24 der das Striegelgelenk 46 umfassende Striegel 22 angeordnet. Der Striegel 22 ist mit dem Vorspannelement 36 verbunden. Die Zugkraft des Vorspannelements 36 ist veränderbar. Durch ein Verändern der Zugkraft des Vorspannelements 36 wird der Striegel 22 entlang des Verkippungspfades K um das Striegelgelenk 46 verkippt. Folglich wird der Anlagedruck des Striegels 22 verändert. Beim Verkippen entlang des Verkippungspfades K im Uhrzeigersinn um das Striegelgelenk 46 wird der Verkippungswinkel β zwischen dem Striegel 22 und der Vertikalen V verändert. Beim Erhöhen der Zugkraft des Vorspannelements 36 wird der Striegel 22 derart entlang des Verkippungspfades K verkippt, dass der Striegel 22 sich in Anliegerichtung A auf eine landwirtschaftliche Nutzfläche zubewegt. Mittels des Sensors 48 ist der Verkippungswinkel β ermittelbar. Wenn der Verkippungswinkel β von dem Sensor 48 erfasst wird, kann der erfasste Verkippungswinkel β von einer elektronischen Datenverarbeitungseinrichtung verarbeitet werden. Der erfasste Verkippungswinkel β kann mittels der elektronischen Datenverarbeitungseinrichtung mit einem Sollwinkel verglichen werden. Der Sollwinkel kann durch eine Benutzereingabe festgelegt werden. Wenn der erfasste Verkippungswinkel β dem Sollwinkel entspricht, bleibt die Zugkraft des Vorspannelements 36 unverändert. Wenn der erfasste Verkippungswinkel β größer ist als der Sollwinkel, so wird die Zugkraft des Vorspannelements 36 erhöht. Wenn der erfasste Verkippungswinkel β kleiner ist als der Sollwinkel, so wird die Zugkraft des Vorspannelements 36 verringert.

In einer nicht gezeigten alternativen Ausführungsform zu Fig. 14 weist der Striegelträger 24 alternativ oder zusätzlich zu dem Sensor 48 einen Kraftaufnehmer zur Ermittlung des Verkippungswinkels β auf. Die Vorspannelemente 36 sind gemeinsam an einer Verstellschiene angeordnet. Durch die Verkippung der Striegel 22 verändert sich die Spannung der Vorspannelemente 36 und somit die Summe der davon auf die Verstellschiene wirkenden Kräfte. Folglich lässt sich durch den der Verstellschiene zugeordneten Kraftaufnehmer über die gemessenen Kräfte der Verkippungswinkel β bestimmen. Hierbei gilt je größer die gemessene Kraft, desto größer ist der Verkippungswinkel β bzw., je kleiner die gemessene Kraft, desto kleiner der Verkippungswinkel β. Die an der Verstellschiene gemessene Kraft kann somit als Sollwert für den Verkippungswinkel β dienen.

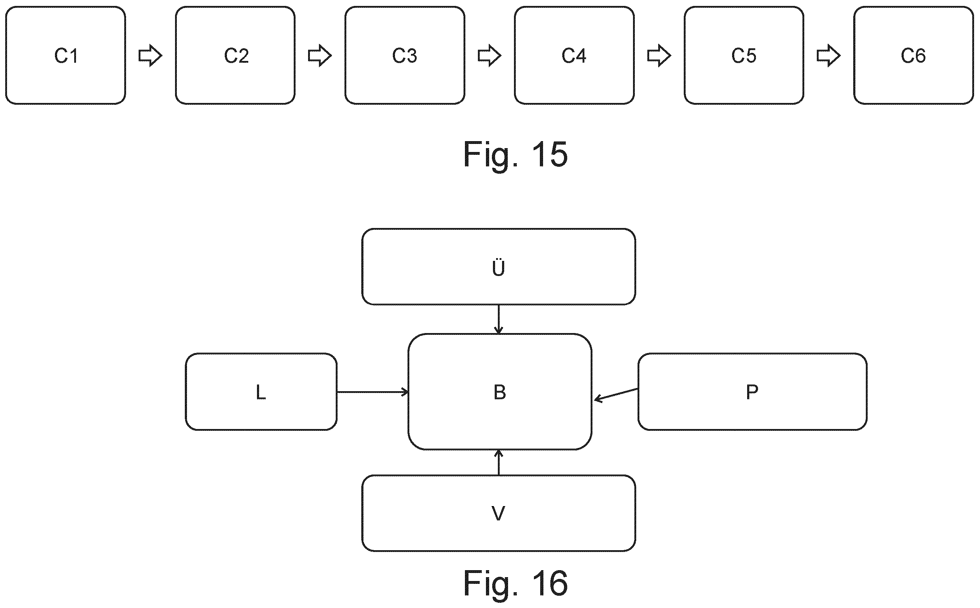

Die Fig. 15 zeigt ein Blockdiagramm, welches das Zusammenspiel des in Fig. 14 beschriebenen Sensors 48 und der in Fig. 12 und Fig. 13 beschriebenen, als Hydraulikzylinder ausgebildeten, Druckeinstelleinrichtung 44 beschreibt. In einem ersten Schritt C1 wird mittels des Sensors 48 eine Istauslenkung der Striegel 22 ermittelt, welche unterhalb einer vorgegebenen Sollauslenkung der Striegel 22 liegt. Die Sollauslenkung kann einen diskreten Wert aufweisen oder in einem Wertebereich liegen. In einem zweiten Schritt C2 wird der Hydraulikdruck im als Hydraulikzylinder ausgebildeten Aktor 44 erhöht, wodurch der Tragarm 26 verschwenkt wird und die Istauslenkung der Striegel 22 somit erhöht wird. In einem dritten Schritt C3 wird die Istauslenkung der Striegel 22 ermittelt, welche der Sollauslenkung der Striegel 22 entspricht. Folglich bleibt der Hydraulikdruck des als Hydraulikzylinder ausgebildeten Aktors 44 in einem vierten Schritt C4 unverändert. In einem fünften Schritt C5 wird mittels des Sensors 48 die Istauslenkung des Striegels 22 ermittelt, welche oberhalb der Sollauslenkung des Striegels 22 liegt. Folglich wird in einem sechsten Schritt C6 der Hydraulikdruck des als Hydraulikzylinder ausgebildeten Aktors 44 verringert und somit wird die Istauslenkung des Striegels 22 verringert.

Die Fig. 16 zeigt in einem Blockdiagramm die Abhängigkeit des Sollbereichs B der mittels des Sensors 48 zu erfassenden Sensorgröße von mehreren Faktoren. Die Sensorgröße kann eine, insbesondere translatorische, Auslenkung und/oder ein Verkippungswinkel der mehreren Striegel 22 und/oder eine Zugkraft der Vorspannelemente 36 sein. Der Sollbereich B weist eine Abhängigkeit vom Anlagedruck P, mit welchem die Striegel 22 an der landwirtschaftlichen Nutzfläche anliegen, auf. Der Sollbereich P weist beispielsweise eine lineare Abhängigkeit von dem Anlagedruck P auf. Wenn eine partielle Übersteuerung Ü, welche beispielsweise eine partielle Erhöhung der Menge des durch die landwirtschaftliche Ausbringmaschine 10 auf der landwirtschaftlichen Nutzfläche auszubringenden Saatguts umfasst, erfolgt, so weist der Sollbereich B eine Abhängigkeit von der partiellen Übersteuerung Ü auf. Der Sollbereich B weist eine lineare Abhängigkeit von der vorgegebenen Auslenkung L der Striegel 22 auf. Der Sollbereich B weist eine Abhängigkeit von der Fahrgeschwindigkeit V der landwirtschaftlichen Ausbringmaschine 10 auf.

### Bezugszeichen

- 10: Landwirtschaftliche Ausbringmaschine
- 12, 12a, 12b: Scharanordnungen
- 14: Schare
- 16a-16c: Scharreihen
- 18: Tiefenführungsräder
- 20, 20a, 20b: Striegelanordnungen
- 22: Striegel
- 24, 24a, 24b: Striegelträger
- 26, 26a-26d: Tragarme
- 28: Ausbringmaterialbehälter
- 30: Materialausbringeinrichtung
- 31: Förderleitungen
- 32: Abgaberohre
- 34: elektronische Steuerungseinheit
- 35, 35a-35d: Druckeinstelleinrichtungen
- 36: Vorspannelemente
- 38: Verstellschiene
- 40a, 40b: Striegelbereiche
- 42: Einstellgelenke
- 44: Aktoren
- 46: Striegelgelenke
- 48: Sensoren

- F: Fahrtrichtung
- S: Schwenkachse
- N: landwirtschaftliche Nutzfläche
- H: Horizontale
- V: Vertikale
- P1, P2: Vertikalstellungspfad
- K: Verkippungspfad
- A: Anliegerichtung
- α1, α2: Vertikalstellungswinkelbereich
- β: Verkippungswinkel

- C1-C6: Schritte

- B: Sollbereich
- P: Anlagedruck
- Ü: partielle Übersteuerung
- L: vorgegebene Auslenkung
- V: Fahrgeschwindigkeit

## Patentansprüche

1. Landwirtschaftliche Ausbringmaschine (10) zum Ausbringen von Ausbringmaterial auf einer landwirtschaftlichen Nutzfläche (N), umfassend:
- eine Scharanordnung (12, 12a, 12b), welche mehrere quer zur Fahrtrichtung (F) nebeneinander angeordnete Schare (14) zum Erzeugen von Ablagefurchen für das Ausbringmaterial aufweist, und
- eine Striegelanordnung (20, 20a, 20b), welche mehrere in Fahrtrichtung (F) hinter den Scharen (14) angeordnete Striegel (22) aufweist, welche dazu eingerichtet sind, in Fahrtrichtung (F) hinter den Scharen (14) mit einem Anlagedruck über den Boden der landwirtschaftlichen Nutzflächen (N) zu streichen, um die Erdbedeckung des in die Ablagefurchen abgelegten Ausbringmaterials zu vergleichmäßigen;
**gekennzeichnet durch** eine oder mehrere ansteuerbare Druckeinstelleinrichtungen (35, 35a-35d), mittels welcher der Anlagedruck mehrerer oder sämtlicher Striegel (22) während eines Ausbringvorgangs veränderbar ist.

2. Landwirtschaftliche Ausbringmaschine (10) nach Anspruch 1,
**dadurch gekennzeichnet, dass** die eine oder mehreren Druckeinstelleinrichtungen (35, 35a-35d) jeweils eine Schwenkmechanik umfassen, mittels welcher die mehreren oder sämtlichen Striegel (22) zum Verändern des Anlagedrucks schwenkbar sind.

3. Landwirtschaftliche Ausbringmaschine (10) nach Anspruch 1 oder 2, **dadurch gekennzeichnet, dass** die eine oder mehreren Druckeinstelleinrichtungen (35, 35a-35d) jeweils einen Aktor (44) umfassen.

4. Landwirtschaftliche Ausbringmaschine (10) nach Anspruch 3,
**dadurch gekennzeichnet, dass** der Aktor (44) jeweils einen oder mehrere hydraulische Zylinder umfasst.

5. Landwirtschaftliche Ausbringmaschine (10) nach einem der vorstehenden Ansprüche,
**gekennzeichnet durch** einen oder mehrere die Striegelanordnung (20, 20a, 20b) tragende Tragarme (26, 26a-26d), welche mittels der einen oder den mehreren Druckeinstelleinrichtungen (35, 35a-35d) schwenkbar sind.

6. Landwirtschaftliche Ausbringmaschine (10) nach Anspruch 5,
**dadurch gekennzeichnet, dass** der eine oder die mehreren Tragarme (26, 26a-26d) eine Schwenkachse aufweisen, wobei der eine oder die mehreren Tragarme (26, 26a-26d) und die mehreren oder sämtlichen Striegel (22) um die Schwenkachse (S) schwenkbar sind.

7. Landwirtschaftliche Ausbringmaschine (10) nach einem der vorstehenden Ansprüche,
**gekennzeichnet durch** eine elektronische Steuerungseinheit (34), welche dazu eingerichtet ist, die eine oder mehreren Druckeinstelleinrichtungen (35, 35a-35d) zum Verändern des Anlagedrucks der Striegel (22) anzusteuern.

8. Landwirtschaftliche Ausbringmaschine (10) nach Anspruch 3 und 7, **dadurch gekennzeichnet, dass** mehrere Aktoren (44) der einen oder mehreren Druckeinstelleinrichtungen (35, 35a-35d) mittels der elektronischen Steuerungseinheit (34) gemeinsam oder unabhängig voneinander ansteuerbar sind.

9. Landwirtschaftliche Ausbringmaschine (10) nach Anspruch 7 oder 8,
**dadurch gekennzeichnet, dass** mittels der elektronischen Steuerungseinheit (34) ein Sollanlagedruck an den Striegeln (22) einstellbar ist.

10. Landwirtschaftliche Ausbringmaschine (10) nach Anspruch 9,
**dadurch gekennzeichnet, dass** die elektronische Steuerungseinheit (34) dazu eingerichtet ist, den Sollanlagedruck und/oder einen Sollanlagedruckbereich zu ermitteln.

11. Landwirtschaftliche Ausbringmaschine (10) nach Anspruch 10,
**dadurch gekennzeichnet, dass** die elektronische Steuerungseinheit (34) dazu eingerichtet ist, beim Ermitteln des Sollanlagedrucks und/oder des Sollanlagedruckbereichs
- den Anlagedruck der mehreren Schare (14);
- die Fahrgeschwindigkeit der landwirtschaftlichen Ausbringmaschine (10);
- eine vorgegebene Sollauslenkung der Striegel (22);
- des auszubringenden Ausbringmaterials; und/oder
- der auszubringenden Menge an Ausbringmaterial;
zu berücksichtigen.

12. Landwirtschaftliche Ausbringmaschine (10) nach Anspruch 5,
**gekennzeichnet durch** einen oder mehrere Sensoren (48), welche dazu eingerichtet sind,
- den Anlagedruck der mehreren Striegel (22);
- den Abstand zwischen einem oder mehreren Referenzpunkten und der landwirtschaftlichen Nutzflächen (N); und/oder
- eine Istauslenkung der Striegel (22);
zu erfassen.

13. Landwirtschaftliche Ausbringmaschine (10) nach einem der vorstehenden Ansprüche,
**dadurch gekennzeichnet, dass** die mehreren oder sämtlichen Striegel (22) mittels der einen oder mehreren Druckeinstelleinrichtungen (35, 35a-35d) zwischen einer ausgeklappten Arbeitsposition und einer eingeklappten Transportposition klappbar sind.

14. Verfahren zum Betreiben einer landwirtschaftlichen Ausbringmaschine (10), insbesondere einer landwirtschaftlichen Ausbringmaschine (10) nach einem der vorstehenden Ansprüche, mit den Schritten:
- Erzeugen von Ablagefurchen für Ausbringmaterial mittels mehrerer quer zur Fahrtrichtung (F) nebeneinander angeordneter Schare (14) einer Scharanordnung (12, 12a, 12b); und
- Vergleichmäßigen der Erdbedeckung des in die Ablagefurchen abgelegten Ausbringmaterials durch Streichen von mehreren in Fahrtrichtung (F) hinter den Scharen (14) angeordneten Striegeln (22) einer Striegelanordnung (20, 20a, 20b) über den Boden der landwirtschaftlichen Nutzfläche (N) mit einem Anlagedruck;
**gekennzeichnet durch** den Schritt:
- Verändern des Anlagedrucks der mehreren oder sämtlichen Striegel (22) während eines Ausbringvorgangs mittels einer oder mehrerer Druckeinstelleinrichtungen (35, 35a-35d).
